# NEW EUROPEAN PATENT SPECIFICATION

(11) **EP 0 667 945 B2**
(45) Date of publication and mention of the opposition decision: **02.01.2002**
(45) Mention of the grant of the patent: 29.01.1997
(21) Application number: 93924631.0
(22) Date of filing: 09.11.1993
(51) Int. Cl.: F23C 10/00, F22B 31/00, B01J 8/24

(54) **METHOD AND APPARATUS FOR OPERATING A CIRCULATING FLUIDIZED BED REACTOR SYSTEM**
VERFAHREN UND VORRICHTUNG ZUM BETRIEB EINES REAKTORSYSTEMS MIT ZIRKULIERENDER WIRBELSCHICHT
PROCEDE ET APPAREIL PERMETTANT DE FAIRE FONCTIONNER UN SYSTEME DE REACTEUR A LIT FLUIDISE EN CIRCULATION

(30) Priority: 10.11.1992 US 973396; 05.04.1993 US 41571; 12.07.1993 US 89810; 22.09.1993 US 124767
(43) Date of publication of application: 23.08.1995
(73) Proprietor: Foster Wheeler Energia Oy, 00440 Helsinki (FI)
(72) Inventor: Hyppänen, Timo, FIN-48710 Karhula (FI)
(74) Representative: Görg, Klaus, Dipl.-Ing.
(86) International application number: FI9300466
(87) International publication number: WO9411674

(56) References cited:
- EP-A- 0 453 373
- EP-B- 0 457 983
- WO-A-89/05942
- FR-A- 2 323 101
- US-A- 4 457 289
- US-A- 4 594 967
- US-A- 4 716 856
- US-A- 4 813 479
- US-A- 4 951 612
- US-A- 5 014 652
- US-A- 5 060 599

## Description

This invention relates to a novel method and an apparatus for operating a circulating fluidized bed (CFB) system.

CFB systems, such as circulating fluidized boilers, include a combustion chamber, having a fast, e.g. gas velocities > 2 m/s, fluidized bed of solid particles established therein. A particle separator is connected to a discharge opening in the upper part of the combustion chamber and a return duct is connected thereto, for recycling particles separated in the separator through a solid particle inlet into the lower part of the combustion chamber. A heat exchanger may be connected to the recycling system for recovering heat from the system.

Typically heat is recovered from fluidized bed boilers by heat transfer surfaces in the combustion chamber and in a convection section disposed in the path of hot flue gas. The peripheral walls of the combustion chambers are made as membrane walls in which vertical tubes are combined by fins to form evaporating surfaces. Additional heat transfer surface such as superheaters may be arranged within the upper part of the combustion chamber for superheating the steam.

Corrosion and erosion constitute a problem in the high temperature and high flow velocity surroundings within the combustion chamber and the heat transfer surfaces have to be made of expensive heat resistant material.

In conventional CFB systems it can be difficult to achieve desired superheating of steam at low load conditions. The combustion chamber exit gas temperature tends tp decrease with decreasing load and special arrangements have to be made in order to achieve desired results with superheaters in the convection section. Additional superheaters disposed within the combustion chamber are not an acceptable solution since they increase costs and control problems in the boiler.

Thus there is a need especially for pressurized applications to find new ways of adding heat transfer surfaces into the system without having to increase the size of the combustion chamber, which would increase the size of the pressure vessel.

It has been suggested to use external separate heat exchangers (EHE) for increasing the superheating capacity. The external heat exchangers usually consume too much space. It is also difficult to control heat transfer in these at different e.g. fluctuating load conditions.

It has been suggested in US patent No. 4,716,856 to include heat transfer surfaces in the recycling system of a circulating fluidized bed reactor. The heat transfer surfaces are then disposed in a fluidized bed of solid circulating material collected in a heat exchanger chamber formed in the bottom part of the return duct. Thus the circulating solid material provides the additional heat needed for e.g. superheating etc. without a need to utilize separate external heat exchangers.

This system is, however, dependent on hot solid particles being entrained with the flue gases and recycled into the heat exchanger chamber. At low load conditions and hence low fluidizing gas flow velocities, the amount of hot particles present in the gas flow may be too small to maintain the heat transfer capacity needed for superheating.

A method and apparatus respectively according to the preambles of claims 1 and 11 are known from US-A-45 95 967. This document discloses a fluidized bed reactor and a method of operating same in which three discrete chambers are formed in a housing and a main fluidized bed containing particulate fuel and adsorbent material is established in the first chamber. The fluidizing air in this chamber entrains a portion of the particulate material as it passes through the bed and the first chamber. A portion of the entrained material is separated and introduced to additional grid means disposed in the second chamber to establish a bed of the separated material. This material is cooled and passed to a third chamber for storage and the latter is connected to the main fluidizing bed for selectively reinjecting the cooled separated particulate material back to the main fluidized bed.

It is an object of the present invention to provide a method and an apparatus for operating circulating fluidized bed systems in which the above mentioned drawbacks are minimized.

It is also an object of the present invention to provide an improved method and apparatus for heat recovery at different loads in circulating fluidized bed systems.

This is achieved according to the present invention by a method including the features of claim 1 and a circulating fluidized bed reactor system including the features of claim 11. Detailed embodiments are described in the dependent claims.

According to the present invention an improved method of operating a CFB system is provided including a heat exchanger chamber formed in the lower part of the return duct, the heat exchanger chamber having one wall section in common with the combustion chamber. The method comprises the following steps:
(a) establishing a fast fluidized bed of solid particles in the combustion chamber so that a particle suspension comprising flue gases and solid particles entrained therein is caused to flow upwardly in the combustion chamber and be discharged through the discharge opening;
(b) separating solid particles from the particle suspension in a particle separator;
(c) directing separated solid particles into a return duct having a heat exchanger chamber in a lower portion thereof,
(d) establishing a bed of solid particles in the heat exchanger chamber,
(e) reintroducing solid particles from the heat exchanger chamber into the combustion chamber through the solid particle inlet disposed in the common wall section and
(f) introducing additional solid particles directly from the combustion chamber into the lower portion of the return duct.

During high load conditions a large solid particle flow is entrained with the flue gases and recycled through the separator, return duct and heat exchanger chamber into the combustion chamber, providing the desired heat transfer capacity.

During low load conditions solid particles are caused to flow directly from the combustion chamber into the heat exchanger chamber through a passage in the common wall therebetween, the direct solid flow enhancing the heat transfer capacity so that it achieves the desired level.

Solid particles may be reintroduced from the heat exchanger chamber into the combustion chamber through a solid particle inlet or inlets disposed in the common wall between the chambers. The solid particle inlet or inlets may be disposed in the lower part of the heat exchanger chamber below the surface of the particle bed therein or the solid particle inlet(s) may constitute overflow openings higher up in the heat exchanger chamber allowing gas also to flow from the return duct into the combustion chamber. In many applications both types of solid particle inlets are utilized. The inlets disposed below the surface of the particle bed comprise according to a preferable embodiment of the invention a solid flow seal formed by two or more narrow (small vertical dimension) horizontal slots disposed one on top of the other in the common wall preventing uncontrolled flow of particles through the inlets. The slots may be prefabricated in a frame like construction which is built into the wall.

In order to prevent a direct and an uncontrolled flow of particles through the slots, the slots should have a height (h) to length (I) ratio h/l < 0.5. Slots having a length of about 200 mm to 300 mm, e.g. the length of the cross section of the common wall in which the slots are formed, should have a height < 100 mm to 150 mm to be able to prevent an uncontrolled flow of particles therethrough. In such slots solid particles tend to build up and form a sealing plug preventing flow by gravity. A desired flow of solid particles through the slots is achieved by transporting gas being introduced into the bed in the vicinity of the slots. Thus it is possible to control the solid particle flow through the inlets and the flow of particles passing the heat transfer surfaces in the heat exchanger bed.

The substantially horizontal slots in the inlets need not to be completely horizontal, but can be made inclined having outlet ends in combustion chamber on a higher level than inlet ends in return duct, so that the length (I) of the slots can be further decreased compared to horizontal slots having the same cross section. The inclined slots also prevent coarse material from accumulating at the inlet end of the slots.

The total vertical extension hₜₒₜ needed for an imaginary single large opening can -- according to one important aspect of the invention -- be divided into several vertical extensions h₁, h₂, h₃, ..., each divided vertical extension being just a fraction of the total hₜₒₜ needed. The length (I) of each slot can then be decreased in the same proportion as the vertical extension is decreased, without the sealing effect of the solid flow being decreased.

According to a preferred embodiment of the invention short slots, only long enough to extend through a common (usually refractory) lined membrane wall, between the heat exchanger chamber and the combustion chamber, can be used for transporting particles therethrough, while still providing an adequate solid flow seal.

The slots have approximately a length (I) = the total width (w) of the common wall between the two chambers, the width of the wall including tubes and refractory lining. This is a considerable improvement over prior art L-valve seals, which reach far out from the combustion chamber and consume a large amount of space. The present invention provides a very compact structure in which the solid flow seal can be integrated into the wall construction.

The solid flow seal passages may easily be formed in the fins combining the tubes in a membrane tube wall. In many cases the passages may be formed in a wall section where tubes have been bent apart from each other to provide the space needed for the passages. The passages may be arranged on top of each other, forming e.g. a Ahlstrom "gill seal" solid flow seal connection, and combined in prefabricated frames.

The solid particles may -- especially at high load conditions -- be reintroduced into the combustion chamber by overflow through one or more overflow openings formed in the common wall at a higher level than the solid particle inlets described above. Especially at high load conditions both types of solid particle inlets may be used.

By using small overflow openings for reintroducing solid particles from the heat exchanger chamber into the combustion chamber large particles are prevented from flowing in the other direction, i.e. from the combustion chamber into the heat exchanger chamber. During high load conditions rather large particles may be fluidized in the lower part of the combustion chamber. It is not desireable to move these large particles into the heat exchanger chamber.

At low load conditions there may be no need to reintroduce solid particles through an overflow opening into the combustion chamber. The bed surface level in the heat exchanger chamber may be maintained below the overflow opening and the overflow opening may instead be utilized as a passage introducing solid particles from the combustion chamber into the heat exchanger chamber. At low load conditions the reintroduction of solid particles may take place solely through an overflow open ing or through both types of solid particle inlets.

The overflow opening reintroducing solid particles into the combustion chamber may be constructed so that it can simultaneously or alternatively introduce solid material from the combustion chamber into the return duct as well as from the return duct into the combustion chamber. On the other hand different types of openings for introducing solid particles into the return duct and for reintroducing solid particles into the combustion chamber may be used. The various particle introducing openings may be disposed horizontally side by side or stacked one on top of the other. Gas nozzles, injecting gas flows into or in the vicinity of the overflow openings may be used to control the solid flow through the openings, e.g. to prevent solid particles from flowing from the combustion chamber into the return duct. Gas flowing through the openings may be used as secondary or similar air in the combustion chamber. Additional openings may also be formed higher up in common wall between the return duct and the combustion chamber primarily for introducing gas from the return duct into the combustion chamber.

The bed of particles in the heat exchanger is fluidized in order to enable heat transfer between the particles and heat transfer surfaces disposed in the bed. Fluidizing gas is preferably discharged from the return duct through gas flow openings above the fluidized bed. In order to prevent fluidizing gas from flowing into the particle separator a gas seal may be disposed between the return duct and the separator. The gas seal may constitute a bed of particles disposed in a bottom duct of the separator. The bottom duct is preferably connected by a solid flow seal with the return duct. The solid flow seal preferably comprises two or more vertically narrow horizontal slot like openings stacked one on top of the other in a common wall between the bottom duct and the return duct preventing uncontrolled flow of particles from the bottom duct into the return duct.

The heat transfer from particles to heat transfer surfaces, such as superheater surfaces, may -- according to a preferable embodiment of the invention -- be controlled by fluidizing gas. An increased fluidizing gas flow and increased movement of particles around the heat transfer surfaces provides increased heat transfer. Gas, such as air or inert gas for heat transfer control may be introduced through several separate nozzles.

According to another preferred embodiment of the invention heat transfer may be controlled by controlling the flow of hot solid particles flowing through the bed, i. e. from the bed surface down to the solid particle inlets in the bottom of the bed. This is achieved by controlling the flow of transporting gas controlling the reintroduction of particles through the solid particle inlets. A surplus portion of solid particles being introduced into the return duct and not needed for heat transfer are reintroduced into the combustion chamber by overflow.

By decreasing the amount of solid material being transported through the solid particle inlet(s) below the bed surface and correspondingly increasing the overflow of particles into the combustion chamber an increased amount of particles reaches only as high as the surface of the bed of solid particles before being reintroduced into the combustion chamber. A decreased amount of solid particles thus flows through the bed in contact with heat transfer surfaces. Thus the temperature in the bed decreases, and heat transfer also decreases due to the lower temperature difference between particles and heat transfer surfaces.

By increasing the amount of solid material being transported through the solid particle inlet(s) an increased amount of fresh hot solid material may continuously be transported through the bed increasing the temperature and thus the heat transfer in the bed.

In the bottom of the return duct the bed moves slowly downwardly as solid material is reintroduced into the combustion chamber and new material is continuously added on top of the bed. The height of the bed may thus -- according to a third preferred embodiment of the invention -- be controlled, in a heat exchanger chamber not having an overflow opening, by controlling the transporting gas reintroducing solid material into the combustion chamber. The height of the bed may then in some cases be used to control the heat transfer.

A barrier bed portion of solid particles may be maintained between transporting gas inlets in the vicinity of the solid particle inlets below the bed surface and the fluidizing gas inlets in the heat transfer section of the heat exchanger chamber. A barrier bed close to the transporting gas inlets prevents transporting gas from interfering with the desired heat transfer, while a barrier bed portion of solid particles maintained in the heat transfer section prevents fluidizing gas from interfering with the transport of solid particles through the bed. In most cases these goals may be achieved with using a single barrier bed portion.

The heat exchanger chamber may have an inclined or staged bottom in order to more easily provide for a suitable barrier bed between the transporting gas inlets and fluidizing gas inlets. A partition wall may be disposed on the inclined bottom between the heat transfer and particle transporting sections. Fluidizing gas is introduced through the upper inclined bottom portion into the heat transfer section. Transporting gas is introduced through the lower portion of the inclined bottom. A barrier bed of e.g. only slightly fluidized particles is maintained preferably on the lower portion of the inclined bottom.

The present invention may be applied in reactor systems having return ducts with horizontal bottoms also, as long as care is taken that a barrier bed is allowed to be formed on a portion of the bottom, for preventing transporting gas or fluidizing gas from interfering with each other.

The heat exchanger chamber may -- according to another aspect of the present invention -- have a staged bottom, in which heat transfer section and solid particle inlets are disposed at different levels. The heat transfer section is disposed at an higher level than the discharge of solid particles. The solid particle inlets may open into a downward directed duct or channel portion of the heat exchanger chamber, the channel portion being connected to the combustion chamber.

The particles are reintroduced directly from the heat exchanger chamber into the combustion chamber.

The present invention provides an important improvement in the control of heat transfer at both high and low loads. A large enough flow of solid material is maintained in the heat exchanger chamber both during high and low load conditions for achieving desired heat transfer capacity.

The gas space in the heat transfer zone contains primarily clean fluidizing gas without alkaline, chlorine or other corrosive gaseous components and thus provides very advantageous conditions for superheating. Superheaters in this zone may thus be heated to much higher temperatures than possible in corrosive conditions prevailing in the combustion chamber itself. Steam of > 500°C, even > 550°C, may thus also be produced when burning fuels containing corrosive gaseous components.

It has especially been a problem in waste/RDF burning boilers to utilize the heat for superheating, due to the unclean gases, containing different kinds of corrosion causing components. The present invention overcoming this problem by providing a system in which superheater surfaces contacts hot circulating material in a safe gas atmosphere. Also erosion is minimized by using a slowly bubbling bed (having gas velocities of < 1 m/s) in the heat exchanger chamber. Particles colliding with the heat transfer surfaces have a very low impact velocity. Additionally, erosion in the return duct bed is relatively low due to the small particle size of bed material.

According to the invention when the bed in the solid bed chamber is divided into a heat transfer section and a solid particle discharge section close to the solid particle inlets by an inclined bottom (or a separate lower outlet channel portion in the return duct) a significant advantage is achieved, namely: - large particles (e.g. ash particles, agglomerates formed in the bed or refractory material broken loose from the return duct walls) fall by gravity downward in the return duct below the level of the fluidizing gas inlet and away from the heat transfer zone, where they could cause mechanical damage and other problems, (such as decrease in heat transfer).

The present invention provides a very simple and compact CFB boiler construction. The whole recycling system including separator and return duct may be primarily constructed of two at least partly parallel vertical water tube wall panels forming a substantially vertical channel therebetween. The channel preferably has one wall in common with the combustion chamber. The channel typically has a separator in its upper part, a return duct in its middle part and a solid bed chamber in its lowermost part. The solid inlets, overflow openings and other gas and solid material passages connecting the return duct with the combustion chamber may be prefabricated in the common wall e.g. as a frame like construction. Such a frame structure may also easily be connected to the membrane wall on site.

The present invention is particularly advantageous in pressurized fluidized bed systems, i.e. operated at significantly above atmospheric pressure, e.g. at least twice atmospheric pressure, as additional heat transfer surfaces can be located in the return duct in an usually empty space in the pressure vessel and as the additional heat transfer can be controlled by relatively small gas flows and hence small equipment. The present invention provides a compact combustor system, which is easy to build into a pressure vessel.

### BRIEF DESCRIPTION OF DRAWING

The invention will be described further, by way of example, with reference to the accompanying drawings in which
- FIG. 1: shows a schematic vertical section through a CFB apparatus according to one exemplary embodiment of the invention; and
- FIG. 2: shows a vertical section through a second exemplary CFB apparatus according to the invention.

### DETAILED DESCRIPTION OF THE DRAWINGS

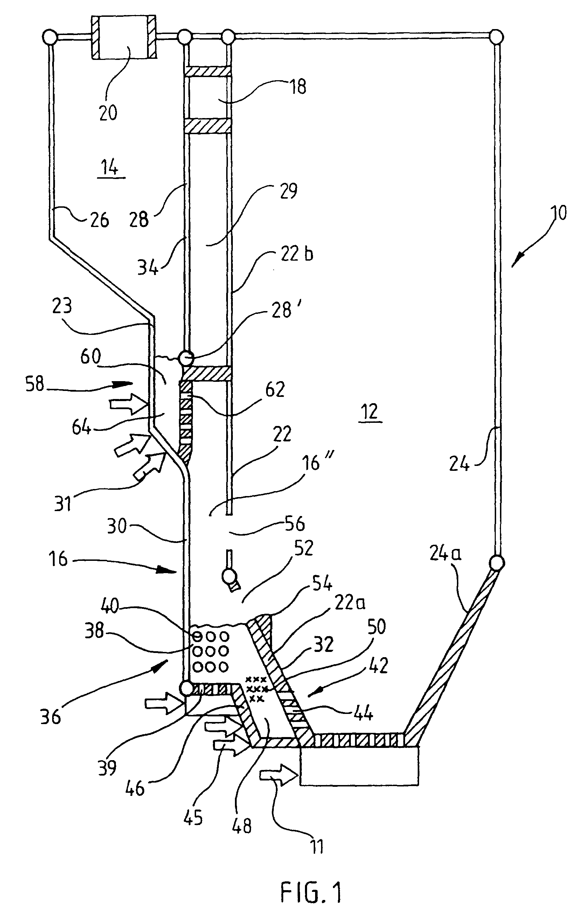

FIG. 1 shows a circulating fluidized bed combustor 10 having a combustion chamber 12 with a fast fluidized bed of particles therein, fluidizing and/or combustion gases (air) being introduced at 11. A particle separator 14 is connected to the upper part of the combustion chamber 12, for separating particles entrained with the mixture of flue gases and solid material being discharged from the combustion chamber 12. A return duct 16 is provided for recirculating separated solid material from the separator 14 into the lower part of the combustion chamber 12. A discharge opening 18 connects the particle separator 14 to the combustion chamber 12. A gas outlet 20 is arranged in the particle separator 14.

The walls 22, 24 of the combustion chamber 12', the walls 22, 26, 28 of the separator 14 and the walls 30, 22 of the return duct 16 are mainly made of water tube or membrane panels. The lower portions (e.g. 22a, 24a) of the walls 22, 24, 30 in the combustion chamber 12 and the return duct 16 may be protected by a refractory lining 32.

The separator 14 and return duct 16 are connected to one side wall 22 of the combustion chamber 12, thereby forming an integral construction. The separator 14 and the return duct 16 are formed in a space between the side wall 22 and a vertical tube panel 23 disposed parallel to the side wail. 22. The side wall 22 thus forms one wall in the separator 14 and one wall of the return duct 16. The lower downwardly inclined portion of the side wall 22 forms a common wall 22a between the return duct 16 and the combustion chamber 12 and the upper part of the side wall 22 forms one part of a double wall construction 22b between the separator 14 and the combustion chamber 12. The vertical tube panel 23 forms the opposite (from wall 22) walls of the separator 14 and the return duct 16. The upper part of the vertical tube panel 23 forms the outer wall 26 in the separator 14 and the lower part of tube panel 23 the outer wall 30 in the return duct 16. The vertical tube panel 23 is disposed at a desired distance from the side wall 22 to provide a cyclone effect to separate introduced gases and solids in a gas/solid suspension therein. At a middle part thereof the vertical tube panel 23 is bent towards the side wall 22 to provide a return duct channel 60 with a smaller cross section (desired for solid flow).

An inner wall 28, formed of a second tube panel 34, is preferably disposed in the separator 14 between the side wall 22 and the outer wall 26 to provide the double wall construction between the separator 14 and the combustion chamber 12. A lower header 28'is provided for tube panel 34 connecting it to a fluid recirculation system. The gas space 29 between the inner wall 28 and the upper part 22b of side wall 22 is a gas tight space isolated from the gas spaces of the combustion chamber 12, the particle separator 14 and the return duct 16. In some applications no double wall construction and hence inner wall 28 is needed, in which case the upper part of side wall 22 may form a common wall between the separator 14 and the combustion chamber 12.

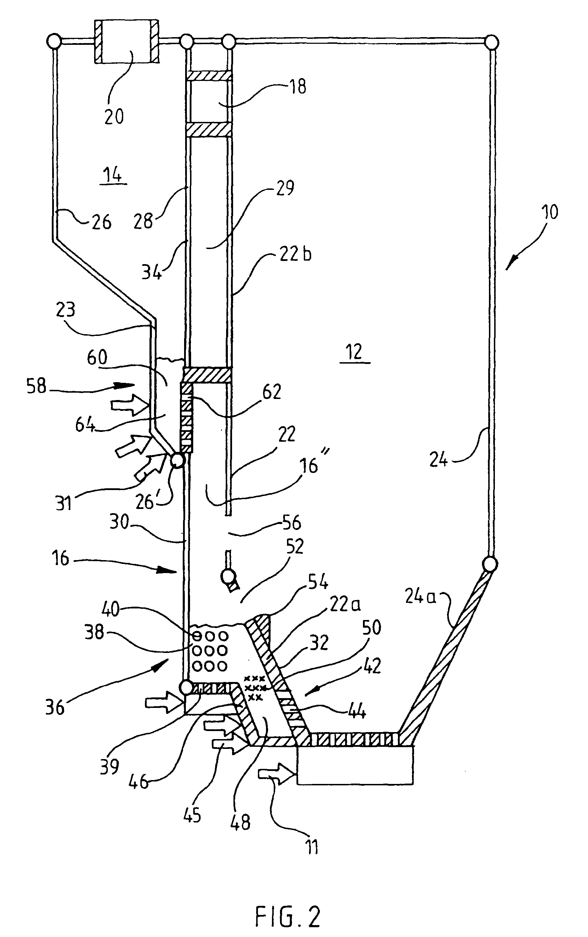

In another alternative embodiment (see FIG. 2 -- in FIG.2 components comparable to those in FIG.1 embodiment are shown by the same reference numerals), a tube panel 23 forms the outer wall 26 of the separator 14, the tube panel having a header 26' for connection thereof to a fluid recirculation system. Then an intermediate vertical tube panel 34 may be provided parallel to the side wall 22 to form a space therebetween, wherein the space between the side wall 22 and the intermediate tube panel 34 forms at its upper part a double wall construction or inner wall 28 for the separator 14 and at its lower part, forms the outer wall 30 for the return duct 16.

In the lower part of the return duct 16 -- seen in FIG. 1 -- a heat exchanger chamber 36 having a bed 38 of solid particles therein is provided. The heat exchanger chamber 36 is formed substantially below the inclined portion 22a of the side wall 22, the heat exchanger chamber 36 thereby having a larger cross section than the return duct 16 above it.

The bed 38 is preferably a bubbling bed 38 of recycling particles in the heat exchanger chamber 36. Gas for fluidizing the bed is introduced through fluidizing gas nozzles 39. Heat transfer surfaces (e.g. tubes) 40 are disposed in the bed 38.

A first type of solid particle inlets 42 is formed in the lower part of the common wall 22 for allowing solid particles to be transported from the heat exchanger chamber 36 into the combustion chamber 12. The first type of solid particle inlets 42 constitute several narrow slot like passages or openings 44 disposed one on top of the other, as seen in FIG. 1. Transporting gas is introduced through gas nozzles 45 for transporting solid particles through the inlets 42.

The bottom 46 of the return duct 16 is staged, the heat transfer section 36 is disposed above it and has a separate lower section 48 at the lowest section of the staged bottom 46 for discharge of solid particles through solid particle inlets 42.

A barrier bed 50 of particles is maintained between the solid particle inlets 42 and the heat transfer section 36 for preventing fluidizing gas or transporting gas interfering with each other and thus facilitating desired control of heat transfer.

A passage 52 for introducing solid material directly from the combustion chamber 12 into the return duct 16 is disposed above the bed 38 of solid particles in the common wall 22a. Solid material circulating within the combustion chamber 12, especially solid material flowing downwardly along the walls of the combustion chamber 12, flows through the passage 52 into the heat exchanger chamber 36. Guide means 54 shaped e.g. as a shaped lip 54 may be disposed in the combustion chamber 12 to guide the solid flow towards the passage 52 or to gather solid particles from an area larger than the cross section of the passage 52 into the return duct 16. Means such as a screen (not shown) in front of passage 52, may be provided to prevent particles larger than a desired size from flowing into the passage 52.

The passage 52 also may -- especially during high load conditions -- be used as an overflow type of solid particle inlet for reintroducing solid particles from the return duct 16 into the combustion chamber 12. At high load conditions the overflow of particles from the return duct 16 may be used to prevent solid particles from flowing from the combustion chamber 12 into the return duct 16. At high load conditions enough solid material is usually already circulating through the particle separator 14 into the return duct 16. The flow direction and flow rate of solid material through the passages 52 may be controlled by gas flows e.g. by injecting gas into the passages 52 or at desired points in the surrounding volume.

Alternatively separate passages for introducing solid particles from the combustion chamber 12 into the return duct 16 and overflow openings for reintroducing solid particles from the return duct 16 into the combustion chamber 12 may be used. If different passages and overflow openings are used they may be disposed at different vertical and/or horizontal locations, any passage introducing solid material into the return duct 16 preferably being disposed above the overflow opening. The passages or overflow openings may also be used to discharge gas from the return duct into the combustion chamber 12.

In FIG. 1 embodiment separate gas inlets 56 are disposed in the common wall 22 at a level above the top surface of the bed 38, for discharging gas from the gas space 16" of the return duct 16 into the combustion chamber 12.

The lower portions 22a,24a of the side walls 22,24 in the combustion chamber 12 are preferably made inclined, e.g. at the top thereof making an angle of roughly 15 - 40° to the vertical, so as to provide a smaller cross sectional area in the lower part than in the upper part of the combustion chamber 12. This leads to higher flow velocities in the lower part of the combustion chamber 12 and very vigorous movement of the solid material therein, which improves the direct flow of solid particles through passages 52 into the return duct 16. In some applications gas may be injected into the lower part of the combustion chamber 12 to provide jets or fountains of solid material at desired locations within the combustion chamber 12. These jets may be used to guide solid material towards the passages 52 introducing solid material into the return duct 16.

A gas seal 58 is provided between the upper part of the return duct 16 and the particle separator 14 for preventing gas from flowing from the return duct 16 into the separator 14. The gas seal 58 construction includes a duct 60 formed in the bottom part of the separator 14, inlet openings 62 between the duct 60 and the upper part of the return duct 16 and solid particles forming a bed 64 in the duct 60. Particles in bed 64 are fluidized by gas introduced through nozzles 31, and transported to the chamber 16" by gas introduced through nozzles 31'. The inlet openings 62 are vertically narrow horizontal slots which form a solid flow seal between the duct 60 and the return duct 16. The solid flow seal prevents uncontrolled solid flow from separator 14 to return duct 16, so that a desired bed level, providing a desired gas seal, is maintained in the duct 60, preventing gas from the duct 16" from flowing into separator 14.

Preferably the entire system 10 is maintained pressurized -- i.e. at superatmospheric pressure, typically at least twice atmospheric pressure.

While the invention has been described in connection with what is presently considered to be a most practical and preferred embodiment of the invention, it is to be understood that the invention is not to be limited to the disclosed embodiments, but on the contrary, is intended to cover various modifications and equivalent arrangements.

For example the circulating fluidized bed system described can include a plurality of return ducts only one or some of them including a heat exchanger chamber, such as the chamber 36 described above.

Also a plurality of heat exchanger sections could be disposed horizontally in the lower part of the return duct one after the other along the side wall 22. The solid material could be introduced into the return duct into the locations between heat exchanger sections and/or the solid material could be discharged from the return duct through solid particle inlets or overflow openings disposed within the heat exchanger sections or in locations between them.

## Claims

1. A method of operating a circulating fluidized bed system, utilizing
- a combustion chamber (12), having a fluidized bed of solid particles therein;
- a particle separator (14) connected to a discharge opening (18) in the upper portion of the combustion chamber (12);
- a return duct (16) connected at an upper portion thereof to the particle separator (14) and at a lower portion to the combustion chamber (12); the method comprising the steps of:
(a) establishing a fast fluidized bed of solid particles in the combustion chamber (12) so that a particle suspension comprising flue gases and solid particles entrained therein is caused to flow upwardly in the combustion chamber (12) and to be discharged through the discharge opening (18);
(b) separating solid particles from the particle suspension in the particle separator (14);
(c) directing separated solid particles into the return duct (16);
**characterized by:**
(d) establishing a bed of solid particles in the return duct (16) having a heat exchanger chamber (36) in a lower portion thereof;
(e) reintroducing solid particles directly from the heat exchanger chamber (36) having a wall section (22a) in common with the combustion chamber (12), into the combustion chamber through a solid particle inlet (42) disposed in the common wall section (22a); and
(f) introducing additional solid particles directly from the combustion chamber (12) into the lower portion of the return duct (16) through a passage (52) in the common wall section (22a).

2. A method as recited in claim 1, **characterized in that** step (d) is practised during high load conditions primarily by collecting therein solid particles separated from the particle suspension.

3. A method as recited in claim 1, **characterized by** comprising the further step of maintaining a fluidized bed of solid particles in the heat exchanger chamber (36) during low load conditions primarily by collecting particles flowing in the vicinity of a side wall of the combustion chamber (12), the particles flowing parallel to, at an inclined angle or perpendicularly to the side wall, and directing them through the passage (22a) in the wall into the return duct (16).

4. A method as recited in claim 1, **characterized in that** step (f) is practised by introducing additional solid particles into the heat exchanger chamber (36) through the passage (52) above the solid particle inlet (42).

5. A method as recited in claim 4, **characterized in that** step (f) is further practised by introducing solid particles into the heat exchanger chamber (16) through the passage (52) in an inclined common wall section (22a) of the lower part of the combustion chamber (12).

6. A method as recited in claim 1, **characterized in that** step (e) is practised by reintroducing solid particles from the heat exchanger chamber (36) into the combustion chamber (12) through the solid particle inlet (42) formed by several vertically narrow substantially horizontal slots (44) disposed below the bed surface in the heat exchanger chamber (36), the slots (44) disposed one on top of the other in the common wall (22a); and that a solid flow valve is formed between the fluidized beds in the heat exchanger chamber (36) and the combustion chamber (12).

7. A method as recited in claim 1, **characterized in that** step (e) is practised by reintroducing solid particles from the heat exchanger chamber into the combustion chamber through the passage (52) forming an overflow opening in the common wall (22a).

8. A method as recited in claim 1, **characterized in that**
- heat transfer surfaces are disposed in a heat transfer section of the bed of solid particles in the heat exchanger chamber (36);
- the solid particle inlet (42) is disposed below the bed level of another section of the bed; and that
- the other section is separated from the heat transfer section by a barrier bed of solid particles.

9. A method as recited in claim 1, **characterized by** controlling the heat transfer in the heat exchanger chamber (36) by controlling the flow of particles therethrough.

10. A method as recited in claim 1, **characterized by** providing a gas seal between the upper part of the return duct (16) and the particle separator (14).

11. A circulating fluidized bed reactor system comprising:
- a combustion chamber (12), having a fast fluidized bed of particles therein and an upper portion, a discharge opening (18) from said upper portion, and a lower portion;
- means for introducing fluidizing gas into said combustion chamber (12);
- a particle separator (14) connected to the discharge opening (18), for separating solid particles from a particle suspension discharged from the combustion chamber (12) through said discharge opening (18);
- a return duct (16) having upper and lower portions, and connected at its upper portion to said particle separator (14) and in its lower portion to said combustion chamber (12), for recycling separated solid particles from the particle separator (14) into said lower portion of said combustion chamber (12);
**characterized by:**
- a heat exchanger chamber (36) formed in the lower portion of said return duct (16) and having a bed of solid particles therein, for recovering heat from solid particles being recycled through the return duct,
- a wall section (22a) in common with said combustion chamber (12) and at least said heat exchanger chamber portion (36) of said return duct (16);
- a solid particle inlet (42) in the common wall section (22a), for introducing solid particles from the heat exchanger chamber (36) into the combustion chamber (12); and
- means for introducing solid particles directly from said combustion chamber (12) into said heat exchanger chamber (36).

12. A circulating fluidized bed reactor system as recited in claim 11, **characterized in that** the means for introducing solid particles directly from said combustion chamber (12) into said heat exchanger chamber (36) comprises a passage (52) formed in said common wall section (22a) between said heat exchanger chamber (36) and said combustion chamber (12) above said solid particle inlet (42).

13. A circulating fluidized bed reactor system as recited in claim 12, **characterized in that** gathering means (54) are positioned in said combustion chamber (12) for gathering solid particles and directing them towards said passage (52) in said common wall section (22a).

14. A circulating fluidized bed reactor system as recited in claim 12, **characterized in that** the common wall section (22a) is inclined and positioned so that an upper portion of said heat exchanger chamber (36) is covered by said common wall section (22a).

15. A circulating fluidized bed reactor system as recited in claim 11, **characterized in that** said solid particle inlet (42) is disposed below the top surface of the bed in said heat exchanger chamber (36), and comprises a solid flow seal for controlling solid flow from said heat exchanger chamber (36) into said combustion chamber (12).

16. A circulating fluidized bed reactor system as recited in claim 11, **characterized in that** an overflow opening (52) forming a solid flow inlet is disposed as the introducing means in said common wall section (22a) for allowing solid particles to flow by overflow from said heat exchanger section (36) into said combustion chamber (12).

17. A circulating fluidized bed reactor system as recited in claim 11, **characterized in that** it includes means for introducing fluidizing gas into the bottom portion of said heat exchanger chamber (36), and a gas flow opening (56) disposed in said common wall (22) between the return duct (16) and said combustion chamber (12) for discharging fluidizing gas into said combustion chamber (12).

18. A circulating fluidized bed reactor system as recited in claim 11, **characterized in that** a gas seal (58) is disposed in said upper portion of said return duct (16) for preventing gas from flowing from said lower portion of the return duct (16) into said particle separator (14).

19. A circulating fluidized bed reactor system as recited in claim 11, **characterized in that** said combustion chamber (12) comprises: a plurality of first primarily vertical tube panels forming an enclosure; and a second primarily vertical tube panel; said return duct (16) and said heat exchanger chamber (36) being formed between one of said first tube panels and said second tube panel.

20. A circulating fluidized bed reactor system as recited in claim 11, **characterized in that** the combustion chamber (12) comprises: a plurality of first primarily vertical, tube panels forming an enclosure; and a second primarily vertical tube panel; said particle separator (14), said return duct (16), and said heat exchanger chamber (36) being formed between one of said first tube panels and said second tube panel.

21. A circulating fluidized bed reactor system as recited in claim 11, **characterized in that** the combustion chamber (12) comprises: a plurality of first primarily vertical, tube panels forming an enclosure; and a second primarily vertical tube panel; said return duct (16) and said heat exchanger chamber (36) being formed between one of said first tube panels and said second tube panel; and a third, primarily vertical, tube panel; said particle separator (14) being formed between said second and said third tube panels.

22. A reactor system as recited in claim 11, **characterized in that** said combustion chamber (12), said particle separator (14) and said heat exchange chamber (36) are all at a pressure of at least twice atmospheric.

23. A method as recited in claim 1, **characterized by** steps (a)-(f) being practised at a pressure of at least twice atmospheric.

## Patentansprüche

1. Verfahren fürs Betreiben eines zirkulierenden Wirbelschichtsystems, bestehend aus
- einer Brennkammer (12) mit einer Wirbelschicht aus Feststoffpartikeln darin;
- einem Partikelabscheider (14), der mit einer Auslaßöffnung (18) im oberen Teil der Brennkammer (12) verbunden ist;
- einem Rückführkanal (16), der an seinem oberen Teil mit dem Partikelabscheider (14) und an seinem unteren Teil mit der Brennkammer (12) verbunden ist; welches Verfahren folgende Schritte umfaßt:
(a) Aufrechterhaltung einer schnellen Wirbelschicht aus Feststoffpartikeln in der Brennkammer (12), so daß eine aus Rauchgasen und davon mitgeführten Feststoffpartikeln bestehende Partikelsuspension veranlaßt wird, in der Brennkammer (12) aufwärts zu fließen und durch die Auslaßöffnung (18) abgeführt zu werden;
(b) Abscheidung von Feststoffpartikeln aus der Partikelsuspension im Partikelabscheider (14);
(c) Leitung abgeschiedener Feststoffpartikeln in den Rückführkanal (16);
**gekennzeichnet durch**:
(d) Aufrechterhaltung eines Betts aus Feststoffpartikeln im Rückführkanal (16), der in seinem unteren Teil eine Wärmetauschkammer (36) aufweist;
(e) Wiedereinführung von Feststoffpartikeln direkt aus der Wärmetauschkammer (36) mit einem mit Brennkammer (12) gemeinsamen Wandabschnitt (22a) in die Brennkammer **durch** einen Feststoffpartikel-Einlaß (42), der im gemeinsamen Wandabschnitt (22a) angeordnet ist; und
(f) Einführung zusätzlicher Feststoffpartikel direkt aus der Brennkammer (12) in den unteren Teil des Rückführkanals (16) **durch** einen Durchlaß (52) im gemeinsamen Wandabschnitt (22a).

2. Verfahren nach Anspruch 1, **dadurch gekennzeichnet, daß** Schritt (d) unter hohen Belastungsverhältnissen in erster Linie dadurch praktiziert wird, daß aus der Partikelsuspension abgeschiedene Feststoffpartikel gesammelt werden.

3. Verfahren nach Anspruch 1, **dadurch gekennzeichnet, daß** es als weiterer Schritt die Aufrechterhaltung einer Wirbelschicht aus Feststoffpartikeln in der Wärmetauschkammer (36) unter niedrigen Belastungsverhältnissen hauptsächlich durch Sammeln von Partikeln, die in der Nähe einer Seitenwand der Brennkammer (12) fließen, wobei die Partikel parallel, in geneigtem Winkel oder senkrecht zur Seitenwand fließen, und Leitung der Partikel in den Rückführkanal (16) durch den Durchlaß (22a) in der Wand umfaßt.

4. Verfahren nach Anspruch 1, **dadurch gekennzeichnet, daß** Schritt (f) dadurch praktiziert wird, daß zusätzliche Feststoffpartikel via Durchlaß (52) über dem Feststoffpartikel-Einlaß (42) in die Wärmetauschkammer (36) eingeführt werden.

5. Verfahren nach Anspruch 4, **dadurch gekennzeichnet, daß** Schritt (f) ferner dadurch praktiziert wird, daß Feststoffpartikel in die Wärmetauschkammer (16) via Durchlaß (52) in einem geneigten gemeinsamen Wandabschnitt (22a) des unteren Teils der Brennkammer (12) eingeführt werden.

6. Verfahren nach Anspruch 1, **dadurch gekennzeichnet, daß** Schritt (e) dadurch praktiziert wird, daß Feststoffpartikel aus der Wärmetauschkammer (36) in die Brennkammer (12) durch den Feststoffpartikel-Einlaß (42) wiedereingeführt werden, der durch mehrere vertikal schmale hauptsächlich horizontale Schlitze (44) gebildet wird, die unterhalb der Bettoberfläche in der Wärmetauschkammer (36) angeordnet sind, welche Schlitze (44) in der gemeinsamen Wand (22a) übereinander angeordnet sind; und daß eine Feststoff-Durchflußschleuse zwischen den Wirbelschichten in Wärmetauschkammer (36) und Brennkammer (12) gebildet wird.

7. Verfahren nach Anspruch 1, **dadurch gekennzeichnet, daß** Schritt (e) dadurch praktiziert wird, daß Feststoffpartikel aus der Wärmetauschkammer in die Brennkammer durch den Durchlaß (52) wiedereingeführt werden, der eine Überlauföffnung in der gemeinsamen Wand (22a) bildet.

8. Verfahren nach Anspruch 1, **dadurch gekennzeichnet, daß**
- Wärmetauschflächen in einem Wärmeübertragungsabschnitt des Betts aus Feststoffpartikeln in der Wärmetauschkammer (36) angeordnet sind;
- der Feststoffpartikel-Einlaß (42) unter dem Bettpegel eines anderen Bettabschnitts angeordnet ist; und daß
- der andere Abschnitt durch ein Sperrbett aus Feststoffpartikeln vom Wärmeübertragungsabschnitt getrennt ist.

9. Verfahren nach Anspruch 1, **dadurch gekennzeichnet, daß** der Wärmeübergang in der Wärmetauschkammer (36) durch Regulierung des Partikelflusses dadurch geregelt wird.

10. Verfahren nach Anspruch 1, **dadurch gekennzeichnet, daß** ein Gasverschluß zwischen dem oberen Teil des Rückführkanals (16) und dem Partikelabscheider (14) vorgesehen ist.

11. Zirkulierendes Wirbelschichtreaktorsystem bestehend aus
- einer Brennkammer (12) mit einer schnellen Wirbelschicht aus Partikeln darin und einem oberer Abschnitt, einer Auslaßöffnung (18) aus dem oberem Abschnitt, und einem unteren Abschnitt;
- Mitteln zur Einführung von Fluidisierungsgas in die Brennkammer (12);
- einem Partikelabscheider (14), der mit der Auslaßöffnung (18) verbunden ist zur Abscheidung von Feststoffpartikeln aus einer Partikelsuspension, die durch die Auslaßöffnung (18) aus der Brennkammer (12) abgeführt wird,
- einem Rückführkanal (16) mit einem oberen und unteren Abschnitt, der an seinem oberen Abschnitt mit dem Partikelabscheider (14) und an seinem unteren Abschnitt mit der Brennkammer (12) verbunden ist zur Rückführung abgeschiedener Feststoffpartikel aus dem Partikelabscheider (14) in den unteren Abschnitt der Brennkammer (12)
**gekennzeichnet durch**:
- eine Wärmetauschkammer (36), die im unteren Abschnitt des Rückführkanals (16) ausgebildet ist und ein Bett aus Feststoffpartikeln darin aufweist zur Rückgewinnung von Wärme aus Feststoffpartikel, die **durch** den Rückführkanal zurückgeleitet werden,
- einen für Brennkammer (12) und mindestens den Wärmetauschkammer-Abschnitt (36) des Rückführkanals (16) gemeinsamen Wandabschnitt (22a);
- einen Feststoffpartikel-Einlaß (42) im gemeinsamen Wandabschnitt (22a) zur Einführung von Feststoffpartikeln aus der Wärmetauschkammer (36) in die Brennkammer (12); und
- Mittel zur Einführung von Feststoffpartikeln direkt aus der Brennkammer (12) in die Wärmetauschkammer (36).

12. Zirkulierendes Wirbelschichtreaktorsystem nach Anspruch 11, **dadurch gekennzeichnet, daß** die Mittel zur Einführung von Feststoffpartikeln direkt aus der Brennkammer (12) in die Wärmetauschkammer (36) einen Durchlaß (52) umfassen, der im gemeinsamem Wandabschnitt (22a) zwischen Wärmetauschkammer (36) und Brennkammer (12) über dem Feststoffpartikel-Einlaß (42) ausgebildet ist.

13. Zirkulierendes Wirbelschichtreaktorsystem nach Anspruch 12, **dadurch gekennzeichnet, daß** die Auffangorgane (54) in der Brennkammer (12) fürs Auffangen von Feststoffpartikeln und Leitung derselben zum Durchlaß (52) hin im gemeinsamem Wand-Abschnitt (22a) angeordnet sind.

14. Zirkulierendes Wirbelschichtreaktorsystem nach Anspruch 12, **dadurch gekennzeichnet, daß** der gemeinsame Wandabschnitt (22a) geneigt und so angeordnet ist, daß ein oberer Abschnitt der Wärmetauschkammer (36) vom gemeinsamen Wandabschnitt (22a) bedeckt wird.

15. Zirkulierendes Wirbelschichtreaktorsystem nach Anspruch 11, **dadurch gekennzeichnet, daß** der Feststoffpartikel-Einlaß (42) unter der Bettoberfläche in der Wärmetauschkammer (36) angeordnet ist und eine Feststoff-Durchflußschleuse zur Regelung des Feststoffflusses aus der Wärmetauschkammer (36) in die Brennkammer (12) umfaßt.

16. Zirkulierendes Wirbelschichtreaktorsystem nach Anspruch 11, **dadurch gekennzeichnet, daß** eine Überlauföffnung (52), die einen Feststoffpartikel-Einlaß bildet, als Einlaßorgan im gemeinsamem Wandabschnitt (22a) angeordnet ist, damit Feststoffpartikel via Überlauf aus dem Wärmetauscher-Abschnitt (36) in die Brennkammer (12) fließen können.

17. Zirkulierendes Wirbelschichtreaktorsystem nach Anspruch 11, **dadurch gekennzeichnet, daß** es Mittel zur Einführung von Fluidisierungsgas in den unteren Teil der Wärmetauschkammer (36) und eine in der gemeinsamen Wand (22) zwischen Rückführkanal (16) und Brennkammer (12) angeordnete Gasdurchflußöffnung (56) zur Ableitung von Fluidisierungsgas in die Brennkammer (12) aufweist.

18. Zirkulierendes Wirbelschichtreaktorsystem nach Anspruch 11, **dadurch gekennzeichnet, daß** ein Gasverschluß (58) im oberem Abschnitt des Rückführkanals (16) angeordnet ist um zu verhindern, daß Gas aus dem unterem Abschnitt des Rückführkanals (16) in den Partikelabscheider (14) fließt.

19. Zirkulierendes Wirbelschichtreaktorsystem nach Anspruch 11, **dadurch gekennzeichnet, daß** die Brennkammer (12) besteht aus: einer Vielzahl erster hauptsächlich vertikaler Rohrpaneele, die eine Umfassung bilden; und einem zweiten in erster Linie vertikalen Rohrpaneel; wobei Rückführkanal (16) und Wärmetauschkammer (36) zwischen einem der ersten Rohrpaneele und dem zweiten Rohrpaneel ausgebildet sind.

20. Zirkulierendes Wirbelschichtreaktorsystem nach Anspruch 11, **dadurch gekennzeichnet, daß** die Brennkammer (12) besteht aus: einer Vielzahl erster hauptsächlich vertikaler Rohrpaneele, die eine Umfassung bilden; und einem zweiten in erster Linie vertikalen Rohrpaneel; wobei Partikelabscheider (14), Rückführkanal (16) und Wärmetauschkammer (36) zwischen einem der ersten Rohrpaneele und dem zweiten Rohrpaneel ausgebildet sind.

21. Zirkulierendes Wirbelschichtreaktorsystem nach Anspruch 11, **dadurch gekennzeichnet, daß** die Brennkammer (12) besteht aus: einer Vielzahl erster hauptsächlich vertikaler Rohrpaneele, die eine Umfassung bilden; und einem zweiten in erster Linie vertikalen Rohrpaneel; wobei Rückführkanal (16) und Wärmetauschkammer (36) zwischen einem der ersten Rohrpaneele und dem zweiter Rohrpaneel ausgebildet sind; und einem dritten in erster Linie vertikalen Rohrpaneel; wobei der Abscheider (14) zwischen dem zweiten und dritten Rohrpaneel ausgebildet ist.

22. Reaktorsystem nach Anspruch 11, **dadurch gekennzeichnet, daß** Brennkammer (12), Partikelabscheider (14) und Wärmetauschkammer (36) alle unter einem, zumindest dem zweifachen Atmosphärendruck entsprechenden Druck stehen.

23. Verfahren nach Anspruch 1, **dadurch gekennzeichnet, daß** die Schritte (a) - (f) unter einem zumindest dem zweifachen Atmosphärendruck entsprechenden Druck praktiziert werden.

## Revendications

1. Procédé de fonctionnement d'un système à lit fluidisé circulant utilisant,
- une chambre de combustion (12), comportant un lit fluidisé de particules solides dans celle-ci;
- un séparateur de particules (14) relié à l'ouverture d'évacuation (18) dans la portion supérieure de la chambre de combustion (12);
- une conduite de retour (16) raccordée avec sa portion supérieure au séparateur de particules (14) et avec une portion inférieure à la chambre de combustion (12); le procédé comprenant les étapes consistant à:
(a) établir un lit fluidisé rapid de particules solides dans la chambre de combustion (12) de façon à ce qu'une suspension de particules comprenant des fumées et des particules y entraînées soit amenée à s'écouler vers le haut dans la chambre de combustion (12) et à être évacuée par l'intermédiare de l'orifice d'échappement (18);
(b) séparer des particules solides de la suspension de particules dans le séparateur de particules (14);
(c) diriger des particules solides séparées dans la conduite de retour (16);
**caractérisé en ce que**:
(d) on établit un lit de particules solides dans la conduite de retour (16) qui présente une chambre d'échangeur de chaleur (36) dans sa portion inférieure;
(e) on réintroduit des particules solides directement de la chambre d'échangeur de chaleur (36), comportant une section murale (22a) en commune avec la chambre de combustion (12), dans la chambre de combustion à travers une admission de particules solides (42) disposée dans la section murale commune (22a); et **en ce que**
(f) on introduit des particules solides additionnelles directement de la chambre de combustion (12) dans la portion inférieure de la conduite de retour (16) via un passage (52) dans la section murale commune (22a).

2. Procédé selon la revendication 1, **caractérisé en ce que** l'étape (d) est pratiquée dans des conditions de charge élevées essentiellement en recueillant au cours de celle-ci des particules solides séparées de la suspension de particules.

3. Procédé selon la revendication 1, **caractérisé en ce que** on comprend l'étape subséquente consistant à maintenir un lit fluidisé de particules solides dans la chambre d'échangeur de chaleur (36) au cours des conditions de charge faibles essentiellement en recueillant des particules s'écoulant au voisinage d'une paroi latérale de la chambre de combustion (12), les particules d'écoulant parallèlement à, sous un angle incliné ou perpendiculairement à la paroi latérale, et à les diriger à travers le passage (22a) dans la paroi vers la conduite de retour (16).

4. Procédé selon la revendication 1, **caractérisé en ce que** l'étape (f) est pratiquée en introduisant des particules solides supplémentaires dans la chambre d'échangeur de chaleur (36) à travers le passage (52) au-dessus de l'orifice d'entrée des particules solides (42).

5. Procédé selon la revendication 4, **caractérise en ce que** l'étape (f) est en outre pratiquée en introduisant des particules solides dans la chambre d'échangeur de chaleur (16) à travers le passage (52) dans une section murale commune inclinée (22a) au niveau de la partie inférieure de la chambre de combustion (12).

6. Procédé selon la revendication 1, **caractérisé en ce que** l'étape (e) et pratiquée en réintroduisant des particules solides issues de la chambre d'échangeur de chaleur (36) dans la chambre de combustion (12) à travers l'orifice d'entrée de particules solides (42) constitué par plusieurs fentes verticalement étroites sensiblement horizontales (44) disposées en-dessous de la surface du lit dans la chambre d'échangeur de chaleur (36), les fentes (44) étant superposées dans la paroi commune (22a); et **en ce qu'**une vanne d'écoulement de solides est constituée entre les lits fluidisés dans la chambre d'échangeur de chaleur (36) et la chambre de combustion (12).

7. Procédé selon la revendication 1, **caractérisé en ce que** l'étape (e) est pratiquée en réintroduisant des particules solides provenant de la chambre d'échangeur de chaleur dans la chambre de combustion à travers le passage (52) constituant un débordement dans la paroi commune (22a).

8. Procédé selon la revendication 1, **caractérisé en ce que**
- des surfaces de tranfert de chaleur sont disposées dans une section de transfert de chaleur du lit en particules solides dans la chambre d'échangeur de chaleur (36);
- l'orifice d'entrée des particules solides (42) est disposé au-dessous du niveau du lit d'une autre section du lit; et **en ce que**
- l'autre section est séparée de la section de transfert de chaleur par une lit barrage de particules solides.

9. Procédé selon la revendication 1, **caractérisé en ce que** l'on commande le transfert de chaleur dan la chambre d'échangeur de chaleur (36) en régulant l'écoulement de particules à travers celle-ci.

10. procédé selon la revendication 1, **caractérisé en ce que** l'on apporte une écluse à gaz entre la partie supérieure de la conduite de retour (16) et le séparateur de particules (14).

11. Système de réacteur à lit fluidisé circulant comprenant:
- une chambre de combustion (12), comportant un fluidisé rapid de particules dans celle-ci et une portion supérieure, une ouverture d'évacuation (18) de ladite portion supérieure, et une portion inférieure;
- des moyens pour introduire du gaz de fluidisation dans ladite chambre de combustion (12);
- un séparateur de particules(14) relié à l'ouverture d'échappement (18) afin de séparer des particules solides à partir d'une suspension de particules évacuée de la chambre de combustion (12) par l'intermédiare de ladite ouverture d'évacuation (18);
- une conduite de retour (16) présentant des portions supérieure et inférieure, et raccordée avec sa portion supérieure audit séparateur de particules (14) et avec sa portion inférieure à ladite chambre de combustion (12), afin de recycler des particules solides séparées provenant du séparateur de particules (14) dans ladite portion inférieure de ladite chambre de combustion (12);
**caractérisé par**:
- une chambre d'échangeur de chaleur (36) constituée dans la portion inférieure de ladite conduite de retour (16) et ayant un lit de particules solides dans celle-ci afin de récupérer de la chaleur issue des particules solides au cours du recyclage à travers la conduite de retour,
- une section murale (22a) en commune avec ladite chambre de combustion (12) et avec au moins ladite portion de chambre d'échangeur de chaleur (36) de ladite conduite de retour (16),
- un orifice d'entrée de particules solides (42) dans la section de la paroi commune (22a) pour introduire des particules solides de la chambre d'échangeur de chaleur (36) dans la chambre de combustion (12); et par
- des moyens pour introduire des particules solides directement de ladite chambre de combustion (12) dans ladite chambre d'échangeur de chaleur (36).

12. Système de réacteur à lit fluidisé circulant selon la revendication 11, **caractérisé en ce que** le moyen pour introduire des particules solides directement de la chambre de combustion (12) dans ladite chambre d'échangeur de chaleur (36) comprend un passage (52) constitué dans ladite section murale comune (22a) entre ladite chambre d'échangeur de chaleur (36) et ladite chambre de combustion (12) au- dessus dudit orifice d'entrée de particules soldies (42).

13. Système de réacteur à lit fluidisé circulant selon la revendication 12, **caractérisé en ce que** des moyen collecteurs (54) sont placés dans ladite chambre de combustion (12) pour recueillir des particules solides et afin de les diriger vers ledit passage (52) dans ladite section murale commune (22a).

14. Système de réacteur à lit fluidisé circulant selon la revendication 12, **caractérisé en ce que** la section murale commune (22a) est inclinée et placée de façon qu'une portion supérieure de ladite chambre d'échangeur de chaleur (36) soit recouverte par ladite section murale commune (22a).

15. Système de réacteur à lit fluidisé circulant selon la revendication 11, **caractérisé en ce que** ledit orifice d'entrée de particules solides (42) est disposé au-dessous de la surface supérieure du lit dans ladite chambre d'échange de chaleur (36), et comprend une écluse d'écoulement de solides afin de commander l'écoulement des solides provenant de la chambre d'échangeur de chaleur (36) vers ladite chambre de combustion (12).

16. Système de réacteur à lit fluidisé en circulation selon la revendication 11, **caractérisé en ce qu** un débordement (52) costituant une entrée d'écoulement de solides est disposée en tant que moyen d'introduction dans ladite section murale commune (22a) afin de permettre aux particules solides de s'écouler par débordement de ladite section d'échangeur de chaleur (36) dans ladite chambre de combustion (12).

17. Système de réacteur à lit fluidisé circulant selon la revendication 11, **caractérisé en ce qu'**il inclut des moyens pour introduire du gaz de fluidisation dans la partie fond de ladite chambre d'échangeur de chaleur (36), et une ouverture du flux gazeux (56) disposée dans ladite paroi commune (22) entre la conduite de retour (16) et ladite chambre de combustion (12) pour évacuer du gaz de fluidisation dans ladite chambre de combustion (12).

18. Système de réacteur à lit fluidisé circulant selon la revendication 11, **caractérisé en ce que** une écluse à gaz (58) est disposée dans ladite portion supérieure de ladite conduite de retour (16) afin d'empêcher que le gaz ne s'écoule de ladite portion inférieure de la conduite de retour (16) dans ledit séparateur de particules (14).

19. Système de réacteur à lit fluidisé circulant selon la revendication 11, **caractérisé en ce que** ladite chambre de combustion (12) comprend: une pluralité de premiers panneaux à tubes essentiellement verticaux constituant une enceinte; et un second panneau à tubes essentiellement vertical; ladite conduite de retour (16) et ladite chambre d'échangeur de chaleur (36) étant constituées entre l'un des premiers panneaux en tubes et ledit second panneau à tubes.

20. Système de réacteur à lit fluidisé circulant selon la revendication 11, **caratérisé en ce que** la chambre de combustion (12) comprend: une pluralité de premiers panneaux à tubes essentiellement verticaux constituant une enceinte; et un second panneau à tubes essentiellement vertical; ledit séparateur de particules (14), ladite conduite de retour (16), et ladite chambre d'échangeur de chaleur (36) étant constitués entre l'un desdits premiers panneaux àtubes et ledit second panneau à tubes.

21. Système de réacteur à lit fluidisé en circulation selon la revendication 11, **caractérisé en ce que** la chambre de combustion (12) comprend: une pluralité de premiers panneaux à tubes essentiellement verticaux constituant une enceinte; et un second panneau à tubes essentiellement vertical; ladite conduite de retour (16) et ladite chambre d'échangeur de chaleur (36) étant réalisées entre l'un desdits premiers panneaux à tubes et ledit second panneau à tubes; et un troisième panneau à tubes essentiellement vertical; ledit séparateur de particules (14) étant constitué entre lesdits second et troisième panneaux à tubes.

22. Système de réacteur selon la revendication 11, **caractérisé en ce que** ladite chambre de combustion (12), ledit séparateur de particules (14) et ladite chambre d'échangeur de chaleur (36) existent tous à une pression au moins le double de la pression atmosphérique.

23. Procédé selon la revendication 1, **caractérisé en ce que** les étapes (a) - (f) sont pratiquées à une pression qui est au moins le double de la pression atmosphérique.
